# EUROPEAN PATENT APPLICATION

(11) **EP 2 031 287 A1**
(43) Date of publication of application: **04.03.2009**
(21) Application number: 07745351.2
(22) Date of filing: 15.06.2007
(51) Int. Cl.: F16K 35/10, F16K 35/00, F16L 55/00

(54) **COVER MEMBER OF CLOSING VALVE OR BRANCH JOINT**

(30) Priority: 16.06.2006 JP 2006168169
(71) Applicant: Daikin Industries, Ltd., Osaka-shi, Osaka 530-8323 (JP)
(72) Inventor: DOMYO, Nobuo, Sakai-shi, Osaka 591-8511 (JP); KAMEYAMA, Syozo, Sakai-shi, Osaka 591-8511 (JP)
(74) Representative: HOFFMANN EITLE
(86) International application number: PCT/JP2007/062096
(87) International publication number: WO 2007/145312

(57) **Abstract**

The present invention relates to a cover member for covering either an operation part of a closing valve or an opening in a branch joint in a refrigeration system.

According to the present invention, the risk of theft of a cover member may be reduced even if the cover member is made of brass.

A valve cover (**6**) according to the present invention covers an operation part (**45**) of a closing valve (**3**) provided in a refrigeration system (**1**), and includes: a cover body (**7**) screwed to the closing valve (**3**) to cover the operation part (**45**); and a resin cap (**8**) for covering the cover body (**7**).

## Description

### TECHNICAL FIELD

The present invention relates to a cover member for covering an operation part of a closing valve or an opening in a branch joint in a refrigeration system.

### BACKGROUND ART

Refrigeration systems of a type as disclosed in Patent Document 1 are well known to date. In refrigeration systems, closing valves and branch joints such as service ports are generally provided in pipes.

Closing valves are placed at the upstream and downstream sides of a compressor and are used to stop circulation of a refrigerant in pipes when compressors are exchanged. Another closing valve is provided in a portion connecting a pipe for an outdoor unit and a pipe for an indoor unit, and is used to stop circulation of a refrigerant in the pipes when the outdoor-unit pipe and the indoor-unit pipe are connected or disconnected. Such a closing valve includes: a valve housing which houses a valve element and has an operation part for operating the valve element; and a cover member attached to the valve housing so as to cover the operation part. In closing or opening the closing valve, the cover member is removed and the valve element is operated through the operation part. After completion of operation of the valve element, the cover member is attached to, and covers, the operation part of the valve housing.

The branch joint has an opening at an end thereof. This opening is used to attach a manometer thereto or to refill a pipe with a refrigerant therefrom. A cover member is provided at the opening of the branch joint. This cover member is removed when the branch joint is used, e.g., when the manometer is attached to the opening, and is mounted when the branch joint is not used.

Such a closing valve and a branch joint are often made of brass for their processability. However, if the cover member is also made of brass, this cover member might be stolen especially in some countries. In other words, if a removable member is made of a metal, such as brass, capable of being exchanged into cash such a member might be stolen.

In view of this, cover members are conventionally made of resin.
Patent Document: Japanese Laid-Open Patent Publication No. 2004-325022

### DISCLOSURE OF INVENTION

### Problems that the Invention is to Solve

Cover members for closing valves and branch joints in refrigeration systems are required of high air tightness and high pressure resistance.

However, if a cover member is made of resin, this resin cover member has insufficient pressure resistance. It is thus necessary to additionally provide a seal mechanism for enhancing pressure resistance in a closing valve or a branch joint. This complicates the structure of the closing valve or the branch joint as well as increases the cost.

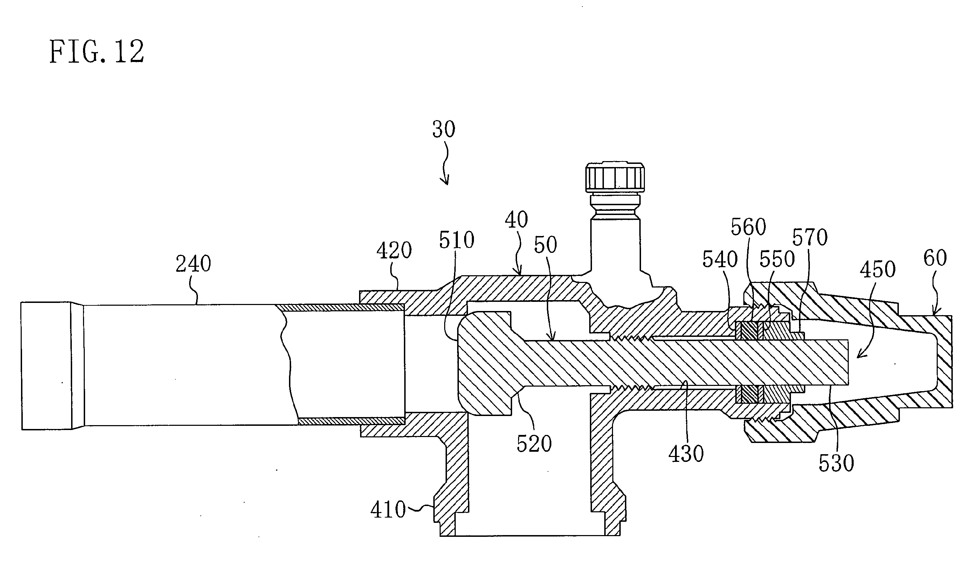

Specifically, as illustrated in FIG. **12**, a closing valve (**30**) provided with a resin cover member includes: a valve housing (**40**); a valve element (**50**) inserted in the valve housing (**40**) through an insertion hole (**430**) formed in the valve housing (**40**); and a valve cover (**60**) made of resin and covering an operation part (**450**) at the external end of the insertion hole (**430**).

The valve housing (**40**) is connected to a compressor (not shown) at its upstream connecting part (**410**) and is connected to a downstream pipe (**240**) at its downstream connecting part (**420**).

The valve element (**50**) is a rod member inserted into the insertion hole (**430**) of the valve housing (**40**). At the tip of the valve element (**50**), provided are a front seal part (**510**) for preventing a downstream flow of a refrigerant and a back seal part (**520**) for preventing the refrigerant circulating in the valve housing (**40**) from flowing toward the insertion hole (**430**). An external thread is formed in a middle part of the valve element (**50**), whereas an internal thread for engaging the external thread is formed in part of the insertion hole (**430**) of the valve housing (**40**). This configuration allows the valve element (**50**) to move forward and backward in the valve housing (**40**) by rotating a grip (**530**) provided at the rear end of the valve element (**50**) with, for example, a spanner.

Gland packing (**560**) held between a packing lower washer (**540**) and a packing upper washer (**550**) and a gland follower (**570**) for fixing the gland packing (**560**) in the insertion hole (**430**) are provided at the external end of the insertion hole (**430**) of the valve housing (**40**). The gland packing (**560**) seals a gap between the insertion hole (**430**) of the valve housing (**40**) and the valve element (**50**), thereby preventing leakage of the refrigerant from the operation part (**450**).

In closing the closing valve (**30**) thus configured, the valve element (**50**) is caused to enter the valve housing (**40**) until the front seal part (**510**) touches the internal edge of the opening in the downstream connecting part (**420**) of the valve housing (**40**), thereby preventing the refrigerant from flowing downstream.

On the other hand, in opening the closing valve (**30**), the valve element (**50**) is taken out from the valve housing (**40**) so that the downstream pipe (**240**) communicates with the compressor.

After repetition of forward and backward movements of the valve element (**50**), the gland packing (**560**) wears out and needs to be replaced. In exchanging the gland packing (**560**), sealing is performed in such a manner that the back seal part (**520**) of the valve element (**50**) is brought into contact with the internal edge of the insertion hole (**430**) to prevent the refrigerant from flowing toward the insertion hole (**430**).

In this manner, in the case where the valve cover (**60**) covering the operation part (**450**) of the valve housing (**40**) is made of resin, it is necessary to provide the gland packing (**560**) in the valve housing (**40**) in order to secure sufficient pressure resistance. Then, the structure of the closing valve (**30**) becomes complicated and the cost thereof rises.

Under these circumstances, there is a demand for making the cover member of a metal, especially brass that has high processability, in order to secure pressure resistance of a closing valve with the cover member.

It is therefore an object of the present invention to provide a cover member which is made of brass but has a low risk of being stolen.

### Means of Solving the Problems

According to the present invention, the brass cover body (**7**) is covered with the resin cap (**8**) so that the fact that the cover body (**7**) is made of brass is concealed.

Specifically, a first aspect of the invention is related to a cover member for covering either an operation part (**45**) of a closing valve (**3**) or an opening in a branch joint provided in a refrigeration system (**1**). The cover member includes: a cover body (**7**) screwed to either the closing valve (**3**) or the branch joint to cover the operation part (**45**) or the opening; and a resin cap (**8**) for covering the cover body (**7**).

With this configuration, the brass cover body (**7**) is covered with the resin cap (**8**) so that the resin cap (**8**) conceals the brass cover body (**7**). Accordingly, this cover member is visually identified as a resin-made member in appearance. Since brass parts are often stolen especially in some countries, concealing of the fact that the cover body (**7**) is made of brass may minimize the risk of theft of the cover member.

According to a second aspect of the invention, in the cover member of the first aspect, the resin cap (**8**) is removably secured to the cover body (**7**) with the cover body (**7**) inserted into the resin cap (**8**).

With this configuration, the resin cap (**8**) is removably secured to the cover body (**7**) so that the cover body (**7**) is allowed to be attached or detached to/from the closing valve (**3**) or the branch joint with the resin cap (**8**) removed. Specifically, if the cover member is attached/detached with a tool (such as a spanner) set on the resin cap (**8**), the resin cap (**8**) might be damaged. On the other hand, with the above configuration, the cover body (**7**) is attached/detached after removal of the resin cap (**8**) to prevent the resin cap (**8**) from being damaged in the attachment/detachment even in the case where the cover body (**7**) needs to be attached/detached with a tool.

According to a third aspect of the invention, in the cover member of the first aspect, the resin cap (**8**) is removably secured to the closing valve (**3**) or the branch joint with the cover body (**7**) inserted into the resin cap (**8**).

With this configuration, as in the second aspect of the invention, the cover member is attached or detached with the resin cap (**8**) removed. Accordingly, it is possible to prevent the resin cap (**8**) from being damaged in attaching/detaching the resin cap (**8**). In addition, in this aspect of the invention, the resin cap (**8**) is attached to the closing valve (**3**) or the branch joint, while covering the cover member. Accordingly, the resin cap (**8**) covers not only the cover member but also an attaching portion where the cover member is attached to the closing valve (**3**) or the branch joint. In a refrigeration system (**1**) used in hostile environments, such as a refrigeration system (**1**) for a container for use in sea transport, an attaching portion where the cover member is attached to a closing valve (**3**) or a branch joint might be corroded to make removal of the cover member difficult. On the other hand, the resin cap (**8**) covers the attaching portion in the foregoing configuration, resulting in that the attaching portion is protected against external environments.

According to a fourth aspect of the invention, the cover member of the second or third aspect, the resin cap (**8**) is removably screwed to the cover body (**7**).

With this configuration, the resin cap (**8**) is screwed to the cover body (**7**) so that the resin cap (**8**) is easily attached or detached to/from the cover body (**7**) or either the closing valve (**3**) or the branch joint. For example, a configuration in which a projecting engaging portion is provided in the resin cap (**8**) and a recessed engaged portion is formed in the cover body (**7**) (or either the closing valve (**3**) or the branch joint) so that the projecting engaging portion is engaged in the recessed engaged portion to attach the resin cap (**8**) to, for example, the cover body (**7**) is conceivable. In this configuration, however, it is necessary to deform the resin cap (**8**) to some degree in order to engage or disengage the projecting engaging portion and the recessed engaged portion and thus a force at a certain level is needed. On the other hand, in the configuration of this aspect of the invention, the resin cap (**8**) is attached by screwing so that the resin cap (**8**) does not need to be deformed and is attached or detached with ease. Specifically, in a case where this cover member is applied to a refrigeration system (**1**) used in hostile environments such as sea, the resin cap (**8**) is sometimes made of a relatively hard resin in order to increase durability of the resin cap (**8**) against external environments. The above configuration is advantageous especially in this case.

According to a fifth aspect of the invention, the cover member of the fourth aspect further includes an elastic member (**82**) that is held between the resin cap (**8**) and the cover body (**7**) and forces the resin cap (8) in a direction opposite to a direction in which the cover body (**7**) is inserted.

In this configuration, when the resin cap (**8**) is attached to the cover body (**7**), the elastic member (**82**) forces the resin cap (**8**) in the direction of inserting the cover body (**7**). Accordingly, loosening of screwing of the resin cap (**8**) may be prevented.

According to a sixth aspect of the invention, in the cover member of the first aspect, the resin cap (**8**) includes: a first divided portion (**9**) covering the cover body (**7**) from the side thereof facing either the closing valve (**3**) or the branch joint; and a second divided portion (**10**) removably secured to the first divided portion (**9**) and covering the cover body (**7**) from the side thereof opposite to the first divided portion (**9**).

In this configuration, the resin cap (**8**) is divided into portions so that the resin cap (**8**) is allowed to be removably secured to the cover body (**7**) or either the closing valve (**3**) or the branch joint without additional structures for attaching the resin cap (**8**) to the cover body (**7**) or either the closing valve (**3**) or the branch joint.

According to a seventh aspect of the invention, in the cover member of the sixth aspect, the first and second divided portions (**9, 10**) are removably screwed to each other.

When the first divided portion (**9**) and the second divided portion (**10**) are coupled, the first and second divided portions (**9, 10**) do not need to be deformed and are easily coupled by screwing. That is, as in the fourth aspect of the invention, this configuration is advantageous especially when the resin cap (**8**) is made of a relatively hard resin.

According to an eighth aspect of the invention, the cover member of the seventh aspect further includes an elastic member (**82**) that is held between the cover body (**7**) and either the first or second divided portion (**9, 10**) and forces the first or second divided portion (**9, 10**) in a direction of separating the first and second divided portions (**9, 10**).

In this configuration, when the first divided portion (**9**) and the second divided portion (**10**) are coupled, the elastic member (**82**) forces the first and second divided portions (**9, 10**) in the direction of separating the first and second divided portions (**9, 10**). Accordingly, loosening of screwing between the first and second divided portions (**9, 10**) may be prevented.

According to another aspect of the invention, the brass cover member is coated with plating so that the fact that the cover member is made of brass is concealed.

Specifically, a ninth aspect of the invention is related to a cover member that is a brass-made cover member for covering either an operation part (**45**) of a closing valve (**3**) or an opening in a branch joint provided in a refrigeration system (**1**). The surface of the cover member is coated with plating.

In this configuration, plating conceals the fact that the cover member is made of brass. Since brass parts are often stolen especially in some countries, concealing of the fact that the cover member is made of brass may minimize the risk of theft of the cover member.

According to a tenth aspect of the invention, in the cover member of the ninth aspect, the plating is a material selected from the group consisting of black chromium plating, zinc plating, black nickel plating, and black rhodium plating.

In this configuration, the cover member coated with plating of one of black chromium plating, zinc plating, black nickel plating, and black rhodium plating seems to be made of resin in appearance though it is made of brass. As a result, the risk of theft of the cover member may be more greatly reduced.

### EFFECTS OF THE INVENTION

According to the present invention, the brass cover body (**7**) is covered with the resin cap (**8**) so that the cover body (**7**) is concealed and the risk of theft of the cover member may be minimized.

In the second aspect of the invention, the resin cap (**8**) is removably secured to the cover body (**7**). Accordingly, the resin cap (**8**) is removed in attaching/detaching the cover body (**7**). Consequently, damage on the resin cap (**8**) in the attachment/detachment may be prevented.

In the third aspect of the invention, the resin cap (**8**) is removably secured to the closing valve (**3**) or the branch joint. Accordingly, the resin cap (**8**) is removed in attaching/detaching the cover body (**7**). Consequently, damage on the resin cap (**8**) in the attachment/detachment may be prevented. In addition, the resin cap (**8**) attached to the closing valve (**3**) or the branch joint covers not only the cover body (**7**) but also the attaching portion where the cover body (**7**) is attached to the closing valve (**3**) or the branch joint. Accordingly; the attaching portion may be protected against external environments.

In the fourth aspect of the invention, the resin cap (**8**) is removably screwed. Accordingly, the resin cap (**8**) may be easily attached/detached.

In the fifth aspect of the invention, when the resin cap (**8**) is screwed, the elastic member (**82**) is held between the resin cap (**8**) and the cover body (**7**). Accordingly, loosening of screwing of the resin cap (**8**) may be prevented.

In the sixth aspect of the invention, the resin cap (**8**) is divided into portions so that the resin cap (**8**) is allowed to be removably secured to the cover body (**7**) or either the closing valve (**3**) or the branch joint without additional structures for attaching the resin cap (**8**) to the cover body (**7**) or either the closing valve (**3**) or the branch joint.

In the seventh aspect of the invention, the first and second divided portions (**9, 10**) are coupled by screwing. Accordingly, the first and second divided portions (**9, 10**) may be easily coupled.

In the eighth aspect of the invention, when the first and second divided portions (**9, 10**) are coupled, the elastic member (**82**) is held between the first divided portion (**9**) and the cover body (**7**). Accordingly, loosening of screwing between the first and second divided portions (**9, 10**) may be prevented.

In another aspect of the invention, plating on the brass cover member conceals the fact that the cover member is made of brass. Accordingly, the risk of theft of the cover member may be minimized.

In the tenth aspect of the invention, the cover member coated with plating of one of black chromium plating, zinc plating, black nickel plating, and black rhodium plating seems to be made of resin in appearance though it is made of brass. As a result, the risk of theft of the cover member may be more greatly reduced.

### BRIEF DESCRIPTION OF DRAWINGS

[FIG. **1**] FIG. **1** is a perspective view schematically illustrating a front part of a refrigeration system for a container according to an embodiment.
[FIG. **2**] FIG. **2** is a cross-sectional view illustrating a closing valve according to EMBODIMENT 1.
[FIG. **3**] FIG. **3** is a cross-sectional view illustrating a valve cover for a closing valve according to EMBODIMENT 2.
[FIG. **4**] FIG. **4** is a cross-sectional view illustrating a valve cover for a closing valve according to EMBODIMENT 3.
[FIG. **5**] FIG. **5** is a cross-sectional view illustrating a valve cover for a closing valve according to a modified example of EMBODIMENT 3.
[FIG. **6**] FIG. **6** is a cross-sectional view illustrating a valve cover for a closing valve according to another modified example of EMBODIMENT 3.
[FIG. **7**] FIG. **7** is a cross-sectional view illustrating a valve cover for a closing valve according to EMBODIMENT 4.
[FIG. **8**] FIG. **8** is a cross-sectional view illustrating a valve cover for a closing valve according to a modified example of EMBODIMENT 4.
[FIG. **9**] FIG. **9** is a cross-sectional view illustrating a valve cover for a closing valve according to EMBODIMENT 5.
[FIG. **10**] FIG. **10** is a cross-sectional view illustrating a valve cover for a closing valve according to EMBODIMENT 6.
[FIG. **11**] FIG. **11** is a cross-sectional view illustrating a valve cover for a closing valve according to EMBODIMENT 7.
[FIG. **12**] FIG. **12** is a cross-sectional view illustrating a conventional valve cover for a closing valve.

### Description of Numerals

- **1**: refrigeration system (refrigeration system) for container
- **3**: closing valve
- **45**: operation part
- **6**: valve cover (cover member)
- **7, 7G**: cover body
- **8, 8B** through **8F**: resin cap
- **82**: O ring (elastic member)
- **9**: first divided portion
- **10**: second divided portion

### BEST MODE FOR CARRYING OUT THE INVENTION

Hereinafter, embodiments of the present invention will be described with reference to the drawings.

### (EMBODIMENT 1)

Now, EMBODIMENT 1 of the present invention is described.

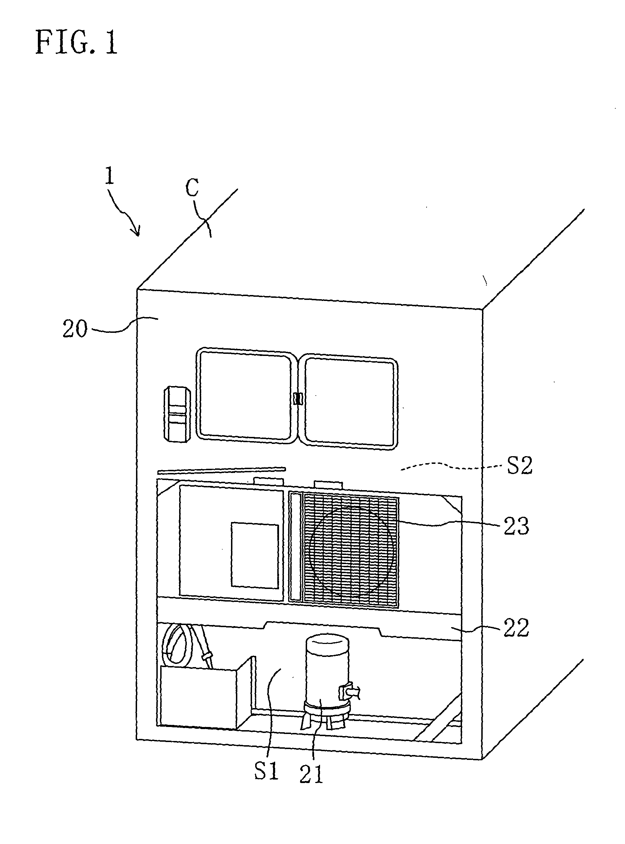

As illustrated in FIG. **1**, a refrigeration system (**1**) for a container includes a housing (**20**) provided at the front opening of a container (**C**) for storing freight.

A lower part of the housing (**20**) is recessed toward the interior of the container (**C**) to form an external storage space (**S1**) at the outside of the lower part of the housing (**20**), while forming an internal storage space (**S2**) in an upper part of the housing (**20**).

The external storage space (**S1**) constitutes an outside air passage through which outside air flows. The external storage space (**S1**) houses a compressor (**21**), a condenser (**22**), and an external fan (**23**), for example. The compressor (**21**) is constituted by a fixed displacement scroll compressor. The condenser (**22**) is constituted by a so-called air-cooled condenser for providing heat exchange between outside air fed by the external fan (**23**) and a refrigerant.

The interior storage space (**S2**) constitutes an inside air passage through which inside air flows. The interior storage space (**S2**) houses an evaporator (not shown) and an internal fan (not shown). The evaporator provides heat exchange between inside air fed by the internal fan and the refrigerant.

The compressor (**21**), the condenser (**22**), the evaporator, and an expansion valve (not shown), for example, are connected to each other by refrigerant pipes (not shown). As a result, in this container refrigeration system (**1**), a refrigerant circuit operating in a vapor compression refrigeration cycle is constituted.

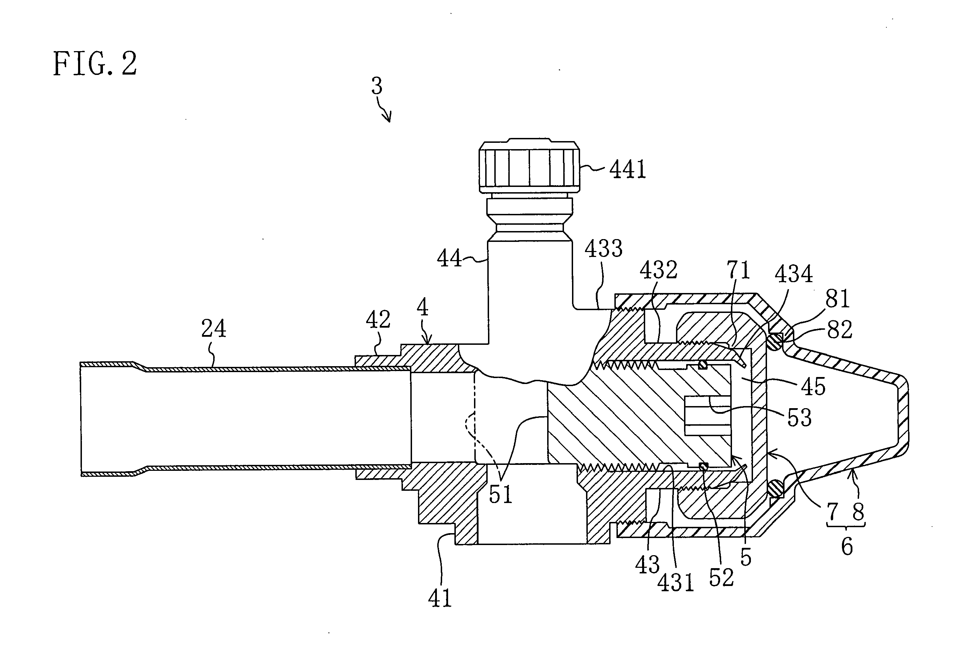

In the refrigerant pipes, closing valves (**3**) (see FIG. **2**) are provided at the upstream and downstream sides of the compressor (**21**). These closing valves (**3**) are used to stop circulation of the refrigerant in refrigerant pipes at the upstream and downstream sides of the compressor (**21**) when the compressor (**21**) is detached from the refrigerant pipes.

FIG. **2** is a partial cross-sectional view illustrating a closing valve (**3**) provided at a downstream side of the compressor (**21**).

The closing valve (**3**) includes: a valve housing (**4**) connected to the compressor and a downstream pipe (**24**) constituting a refrigerant pipe; a valve element (**5**) provided in the valve housing (**4**); and a valve cover (**6**) covering an operation part (**45**) of the valve housing (**4**).

The valve housing (**4**) is made of brass and includes: an upstream connecting part (**41**) connected to the compressor (not shown); a downstream connecting part (**42**) connected to the downstream pipe (**24**); a cylindrical valve-receiving part (**43**) having an insertion hole (**431**) through which the valve element (**5**) is inserted; and a service port (44).

The valve-receiving part (**43**) includes: a small-diameter part (**432**) to which a cover body (**7**) described later is attached; and a large-diameter part (**433**) to which a resin cap (**8**) described later is attached. External threads are formed in the respective outer peripheries of the small-diameter part (**432**) and the large-diameter part (**433**). The open end of the small-diameter part (**432**) is tapered to form a tapered face (**434**).

The valve element (**5**) is a rod member made of brass. At the internal end face of the valve element (**5**), provided is a seal portion (**51**) for preventing the refrigerant from flowing from the valve housing (**4**) to the downstream pipe (**24**) when being in contact with the internal edge of the open end of the downstream connecting part (**42**). A groove is formed in the outer periphery at the external end of the valve element (**5**) around the entire circumference thereof. This groove accepts an O ring (**52**) so that a gap between the valve element (**5**) and the insertion hole (**431**) is sealed. An external thread for engaging an internal thread in the insertion hole (**431**) is formed in a middle part of the valve element (**5**). A tool insertion hole (**53**) for inserting a hexagonal wrench therein is formed in the external end face of the valve element (**5**). This external end face of the valve element (**5**) is exposed from the external end of the insertion hole (**431**). This external end of the insertion hole (**431**) constitutes the operation part (**45**). That is, the valve element (**5**) is moved in/out from the valve housing (**4**) by inserting the hexagonal wrench from the operation part (**45**) into the tool insertion hole (**53**) and then rotating the valve element (**5**) with this hexagonal wrench.

The service port (**44**) is used to carry out various operations for services such as installation of a manometer, gas charging for an air tightness test, charging of a refrigerant, and air purge. The service port (**44**) is constituted by a branch joint branching off and extending from the valve housing (**4**). A cover member (**441**) is attached to the open end of the service port (**44**).

The valve cover (**6**) is attached to the valve-receiving part (**43**) of the valve housing (**4**), and includes: the cover body (**7**) for covering the operation part (**45**); and the resin cap (**8**) for covering the cover body (**7**).

The cover body (**7**) is a bottomed-cylindrical member made of brass. In the inner periphery of the cover body (**7**), an internal thread for engaging the external thread formed in the outer periphery of the small-diameter part (**432**) of the valve-receiving part (**43**) is formed so that the cover body (**7**) is screwed to the small-diameter part (**432**) of the valve-receiving part (**43**). A ridge (**71**) is formed in the inner periphery of the cover body (**7**) around the entire circumference thereof. When the cover body (**7**) is attached to the valve-receiving part (**43**), this ridge (**71**) is brought into contact with the tapered face (**434**) of the valve-receiving part (**43**) so that the insertion hole (**431**) of the valve-receiving part (**43**) is sealed.

The resin cap (**8**) is a bottomed-cylindrical member made of resin. An internal thread is formed in the inner periphery of the resin cap (**8**) at the edge thereof. This internal thread engages the external thread formed in the large-diameter part (**433**) of the valve-receiving part (**43**) so that the resin cap (**8**) is screwed to the valve housing (**4**) with the cover body (**7**) inserted into, and covered with, the resin cap (**8**). An O ring-pressing part (**81**) is formed in the inner periphery of the resin cap (**8**) along the circumference thereof. An O ring (**82**) is set at this O ring-pressing part (**81**). Specifically, the O ring-pressing part (**81**) is formed to alter the shape of the O ring (**82**) in the compression direction by sandwiching the O ring (**82**) between the O ring-pressing part (**81**) and the external end face of the cover body (**7**) when the resin cap (**8**) is attached to the valve housing (**4**). Consequently, when the resin cap (**8**) is attached to the valve housing (**4**), the O ring (**82**) forces the resin cap (**8**) in the direction opposite to the insertion direction of the cover body (**7**), i.e., the direction in which the resin cap (**8**) is removed from the cover body (**7**). Accordingly, loosening of engagement between the resin cap (**8**) and the valve housing (**4**) may be prevented. That is, the O ring (**82**) serves as an anti-loosening member for preventing loosening of engagement between the resin cap (**8**) and the valve housing (**4**).

In an opened state of the closing valve (**3**) thus configured, the valve element (**5**) is moved back in the valve housing (**4**) so that the seal portion (**51**) is removed from the downstream connecting part (**42**) and the downstream connecting part (**42**) becomes open. That is, the closing valve (**3**) is in a state in which the downstream pipe (**24**) communicates with a compressor.

On the other hand, to close the closing valve (**3**), the resin cap (**8**) is removed from the valve housing (**4**). Thereafter, the cover body (**7**) is taken away from the valve housing (**4**). Then, the valve element (**5**) is exposed in the operation part (**45**) of the valve housing (**4**). A hexagonal wrench is inserted in the tool insertion hole (**53**) to rotate the valve element (**5**). Consequently, the valve element (**5**) enters the valve housing (**4**) so that the seal portion (**51**) thereof touches the edge of the open end of the downstream connecting part (**42**) to seal the downstream connecting part (**42**). After the downstream connecting part (**42**) has been sealed with the valve element (5) in this manner, the cover body (**7**) is attached to the valve housing (**4**) to cover the operation part (**45**). Subsequently, the resin cap (**8**) is attached to the valve housing (**4**). Since the compressor (**21**) is disconnected and operation with the service port (**44**) is carried out in the closed state of the closing valve (**3**), the resin cap (**8**) does not need to be attached to the valve housing (**4**) in this state.

To open the closing valve (**3**) again, the procedure for closing the closing valve (**3**) is carried out in reverse order.

### —Effects of EMBODIMENT 1-

In EMBODIMENT 1, the brass cover body (**7**) is covered with the resin cap (**8**) so that the cover body (**7**) is not visually identified from outside. This configuration conceals the fact that the cover body (**7**) is made of brass. Accordingly, the risk of theft of the valve cover (**6**) may be minimized.

The resin cap (**8**) is removably secured to the valve housing (**4**) and covers the cover body (**7**) normally. In attaching/detaching the valve cover (**6**) in order to operate the closing valve (**3**), the resin cap (**8**) is removed before the cover body (**7**) is attached/detached. Specifically, if the valve cover (**6**) is attached/detached with, for example, a spanner set on the resin cap (**8**), the resin cap (**8**) might be damaged. On the other hand, with the configuration of this embodiment, the cover body (**7**) is attached/detached after removal of the resin cap (**8**). Accordingly, damage on the resin cap (**8**) in attaching/detaching the valve cover (**6**) may be prevented.

Further, the resin cap (**8**) is attached to the valve housing (**4**) with the cover body (**7**) covered therewith. Then, an attaching portion where the cover body (**7**) is attached to the small-diameter part (**432**) of the valve-receiving part (**43**), i.e., a portion where the internal thread and the external thread engage each other, is covered with the resin cap (**8**). Consequently, the attaching portion where the cover body (**7**) is attached to the small-diameter part (**432**) is protected against external environments and difficulty in removing the cover body (**7**) stuck to the small-diameter part (**432**) may be reduced. This configuration in which the resin cap (**8**) covers the attaching portion where the cover body (7) is attached to the small-diameter part (**432**) is advantageous especially in a situation where the refrigeration system (**1**) is used for a container for use in sea transport as in this embodiment because the closing valve (**3**) is exposed to hostile external environments such as sea in such a situation.

Moreover, the resin cap (**8**) is made of a relatively-hard resin having excellent durability because the resin cap (**8**) is used under hostile external environments such as sea. Since the resin cap (**8**) is screwed to the valve housing (**4**), the resin cap (**8**) does not need to be deformed and is easily attached/detached to/from the valve housing (**4**) only by rotating the resin cap (**8**) even if the resin cap (**8**) is made of a relatively-hard resin.

In attaching the resin cap (**8**) to the valve housing (**4**), the O ring (**82**) is held between the resin cap (**8**) and the cover body (**7**) while being deformed by compression. Accordingly, loosening of engagement between the resin cap (**8**) and the valve housing (**4**) may be prevented.

In addition, since the cover body (**7**) is made of brass as described above, the ridge (**71**) of the cover body (**7**) and the tapered face (**434**) of the valve housing (**4**) together seal the operation part (**45**) and, in addition, sufficient pressure resistance of this seal portion is secured. In this manner, the pressure resistance is secured by the cover body (**7**), thus eliminating the necessity for, for example, gland packing (**560**) as in the conventional closing valve (**30**) illustrated in FIG. **12**. As a result, the configuration of the closing valve (**3**) may be simplified and the cost thereof may be reduced.

### EMBODIMENT 2

Now, Embodiment 2 of the present invention is described.

A valve cover (**6**) according to EMBODIMENT 2 is different from that of EMBODIMENT 1 in an attachment structure of a resin cap (**8B**) to a valve housing (**4**). Each component having substantially the same structure in EMBODIMENT 1 is identified by the same reference numeral and description thereof will be omitted.

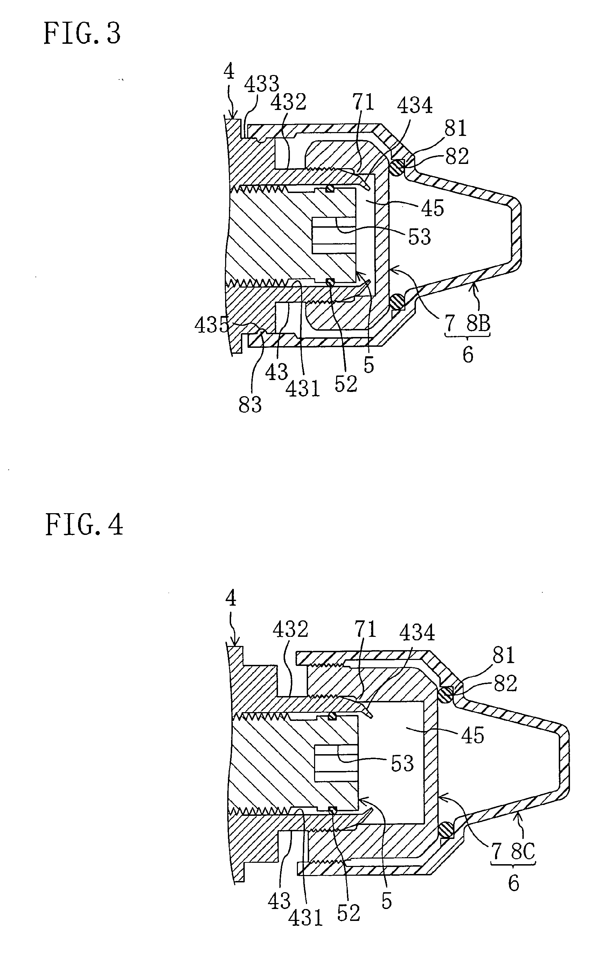

FIG. **3** is a cross-sectional view mainly illustrating a valve cover (**6**) for a closing valve (**3**) according to EMBODIMENT 2.

A projecting engaging portion (**83**) is formed to protrude inward along a radius from the inner periphery of the resin cap (**8B**). On the other hand, a recessed engaged portion (**435**) is formed to be recessed inward along a radius from the outer periphery of a large-diameter part (**433**). The resin cap (**8B**) is attached to the large-diameter part (**433**) by engaging the projecting engaging portion (**83**) of the resin cap (**8B**) in the recessed engaged portion (**435**) of the large-diameter part (**433**).

As in EMBODIMENT 1, the resin cap (**8B**) is attached to the large-diameter part (**433**) with an O ring (**82**) held between the resin cap (**8B**) and a cover body (**7**) and deformed by compression. Thus, the resin cap (**8B**) is forced in the direction in which the resin cap (**8B**) is removed from the cover body (**7**). Accordingly, engagement between the projecting engaging portion (**83**) and the recessed engaged portion (**435**) may be secured.

### -Effects of EMBODIMENT 2-

In EMBODIMENT 2, the brass cover body (**7**) is covered with the resin cap (**8B**) so that the cover body (**7**) is not visually identified from outside. This configuration conceals the fact that the cover body (**7**) is made of brass. Accordingly, the risk of theft of the valve cover (**6**) may be minimized.

In addition, in EMBODIMENT 2, the resin cap (**8B**) is attached to the valve housing (**4**) only by engaging the projecting engaging portion (**83**) in the recessed engaged portion (**435**) without screwing as in EMBODIMENT 1. As a result, the resin cap (**8B**) is allowed to be attached or detached with ease. This configuration is advantageous especially for a case where the resin cap (**8B**) is made of a relatively soft resin.

The other effects are the same as those of EMBODIMENT 1.

### —Modified Examples of EMBODIMENT 2-

In EMBODIMENT 2, the projecting engaging portion (**83**) is formed on the resin cap (**8B**) and the recessed engaged portion (**435**) is formed in the large-diameter part (**433**). However, the present invention is not limited to this configuration.

For example, a configuration in which a recessed engaged portion is formed in the resin cap (**8B**) and a projecting engaging portion is formed on the large-diameter part (**433**) may be employed. The engaged portion does not need to be recessed, and a configuration in which a projecting engaging portion is formed on the resin cap (**8B**) and an engaged projection is formed on the large-diameter part (**433**) such that the projecting engaging portion crosses over the engaged projection and engages therein in securing the resin cap (**8B**) to the large-diameter part (**433**) may be employed.

### EMBODIMENT 3

Now, EMBODIMENT 3 of the present invention is described.

A valve cover (**6**) according to EMBODIMENT 3 is different from that of EMBODIMENT 1 in an attachment structure of a resin cap (**8C**). Each component having substantially the same structure in EMBODIMENT 1 is identified by the same reference numeral and description thereof will be omitted.

FIG. **4** is a cross-sectional view mainly illustrating a valve cover (**6**) for a closing valve (**3**) according to EMBODIMENT 3. The resin cap (**8C**) of EMBODIMENT 3 is screwed to a cover body (**7**).

Specifically, an external thread is formed in the outer periphery of the cover body (**7**) to engage an internal thread formed in the inner periphery of the open end of the resin cap (**8C**), thereby securing the resin cap (**8C**) to the cover body (**7**).

### -Effects of EMBODIMENT 3-

In EMBODIMENT 3, the brass cover body (**7**) is covered with the resin cap (**8C**) so that the cover body (**7**) is not visually identified from outside. This configuration conceals the fact that the cover body (**7**) is made of brass. Accordingly, the risk of theft of the valve cover (**6**) may be minimized.

EMBODIMENT 3 is different from EMBODIMENT 1 in that the resin cap (**8C**) does not cover an attaching portion where the cover body (**7**) is attached to the valve housing (**4**). However, EMBODIMENT 3 is the same as EMBODIMENT 1 in the other aspects and has the same advantages.

### -Modified Examples of EMBODIMENT 3-

In EMBODIMENT 3, the resin cap (**8C**) is screwed to the cover body (**7**). However, the configuration for screwing the resin cap (**8C**) to the cover body (**7**) is not limited to that described in EMBODIMENT 3.

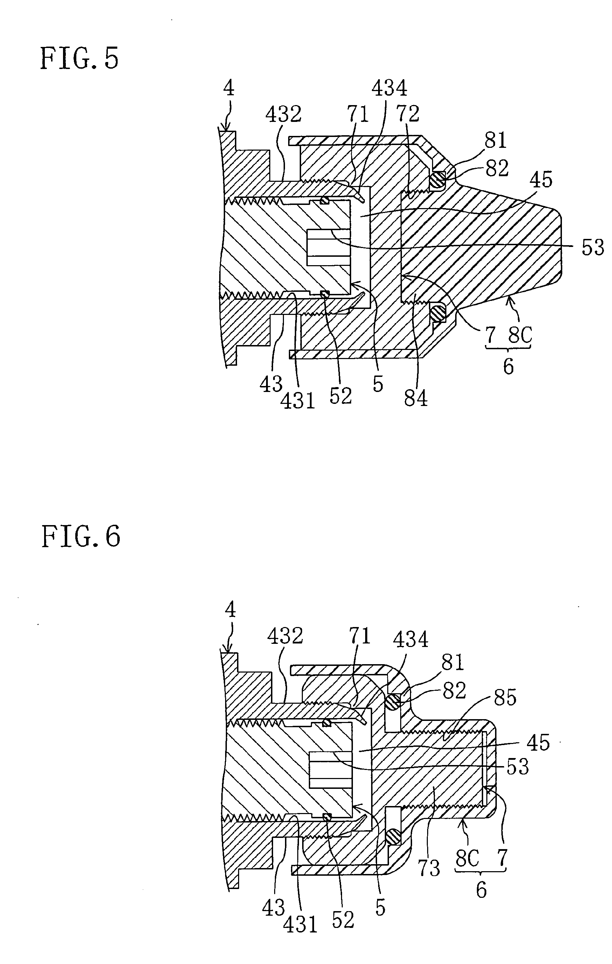

For example, as illustrated in FIG. **5**, a configuration in which a screw hole (**72**) having an internal thread is formed in the external end face of the cover body (**7**) and an external thread part (**84**) having an external thread for engaging the screw hole (**72**) is formed in the inner surface of the resin cap (**8C**) may be employed.

Alternatively, as illustrated in FIG. 6, a configuration in which an external thread part (**73**) protruding outward is provided on the external end face of the cover body (**7**) and a screw hole (**85**) having an internal thread for engaging the external thread part (**73**) is formed in the inner surface of the resin cap (**8C**) may be employed.

### EMBODIMENT 4

Now, EMBODIMENT 4 of the present invention is described.

A valve cover (**6**) according to EMBODIMENT 4 is different from that of EMBODIMENT 3 in an attachment structure of a resin cap (**8D**). Each component having substantially the same structure in EMBODIMENT 3 is identified by the same reference numeral and description thereof will be omitted.

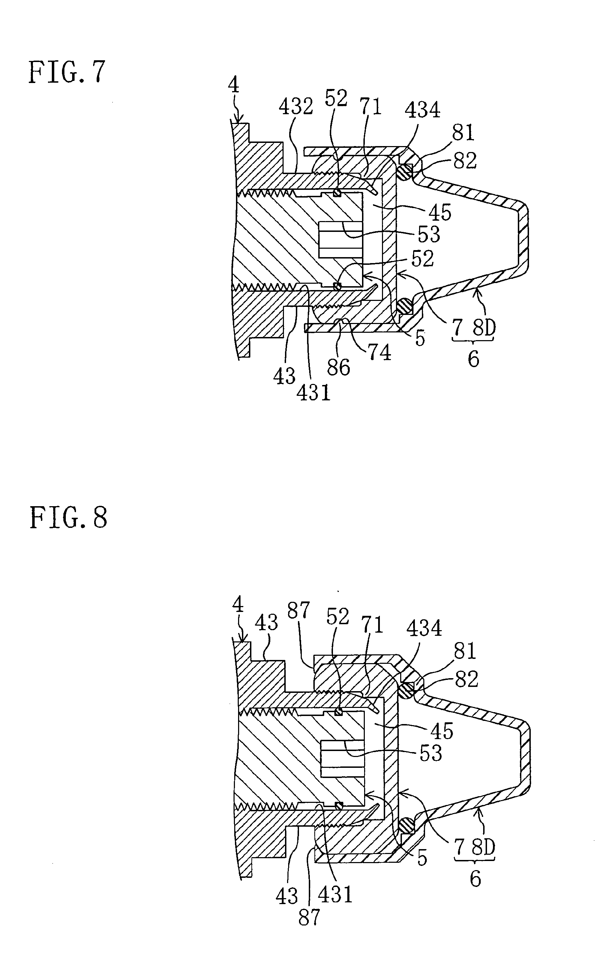

FIG. 7 is a cross-sectional view mainly illustrating a valve cover (**6**) for a closing valve (**3**) according to EMBODIMENT 4.

In EMBODIMENT 4, a projecting engaging portion (**86**) is formed to protrude inward along a radius from the inner periphery of the resin cap (**8D**). On the other hand, a recessed engaged portion (**74**) is formed to be depressed inward along a radius from the outer periphery of the cover body (**7**). The resin cap (**8C**) is attached to the cover body (**7**) by engaging the projecting engaging portion (**86**) of the resin cap (**8D**) in the recessed engaged portion (**74**) of the cover body (**7**).

### —Effects of EMBODIMENT 4-

In EMBODIMENT 4, the brass cover body (**7**) is covered with the resin cap (**8D**) so that the cover body (**7**) is not visually identified from outside. This configuration conceals the fact that the cover body (**7**) is made of brass. Accordingly, the risk of theft of the valve cover (**6**) may be minimized.

In addition, in EMBODIMENT 4, the resin cap (**8D**) is attached to the cover body (**7**) only by engaging the projecting engaging portion (**86**) in the recessed engaged portion (**74**) without screwing as in EMBODIMENT 3. As a result, the resin cap (**8D**) is allowed to be attached or detached with ease. This configuration is advantageous especially for a case where the resin cap (**8D**) is made of a relatively soft resin.

The other effects are the same as those of EMBODIMENT 3.

### -Modified Examples of EMBODIMENT 4-

In EMBODIMENT 4, the projecting engaging portion (**86**) is formed on the resin cap (**8D**) and the recessed engaged portion (**74**) is formed in the cover body (**7**). However, the present invention is not limited to this configuration.

For example, a configuration in which a recessed engaged portion is formed in the resin cap (**8D**) and a projecting engaging portion is formed on the cover body (**7**) may be employed. The engaged portion does not need to be recessed and a configuration in which a projecting engaging portion is formed on the resin cap (**8D**) and an engaged projection is formed on the cover body (7) such that the projecting engaging portion crosses over the engaged projection and engages therein in securing the resin cap (**8D**) to the cover body (7) may be employed.

Alternatively, as illustrated in FIG. **8**, a plurality of locking hooks (**87, 87**, ...) bending inward are provided at the edge of the open end of the resin cap (8D) so that the locking hooks (**87, 87**, ...) lock the cover body (**7**) at the end face thereof closer to the valve housing (**4**), thereby attaching the resin cap (**8D**) to the cover body (**7**). At this time, since an O ring (**82**) is held between the resin cap (**8D**) and the external end face of the cover body (**7**) as in EMBODIMENTS 1 through 3, the resin cap (**8D**) is forced in the direction in which the resin cap (**8D**) is removed from the cover body (**7**) whereas the locking hooks (**87, 87**, ...) prevent the resin cap (**8D**) from being released from the cover body (**7**). That is, the O ring (**82**) and the locking hooks (**87, 87**, ...) cooperate to firmly secure the resin cap (**8D**) to the cover body (**7**).

### EMBODIMENT 5

Now, EMBODIMENT 5 of the present invention is described.

A valve cover (**6**) according to EMBODIMENT 5 is different from that of EMBODIMENT 1 in the structure of a resin cap (**8E**). Each component having substantially the same structure in EMBODIMENT 1 is identified by the same reference numeral and description thereof will be omitted.

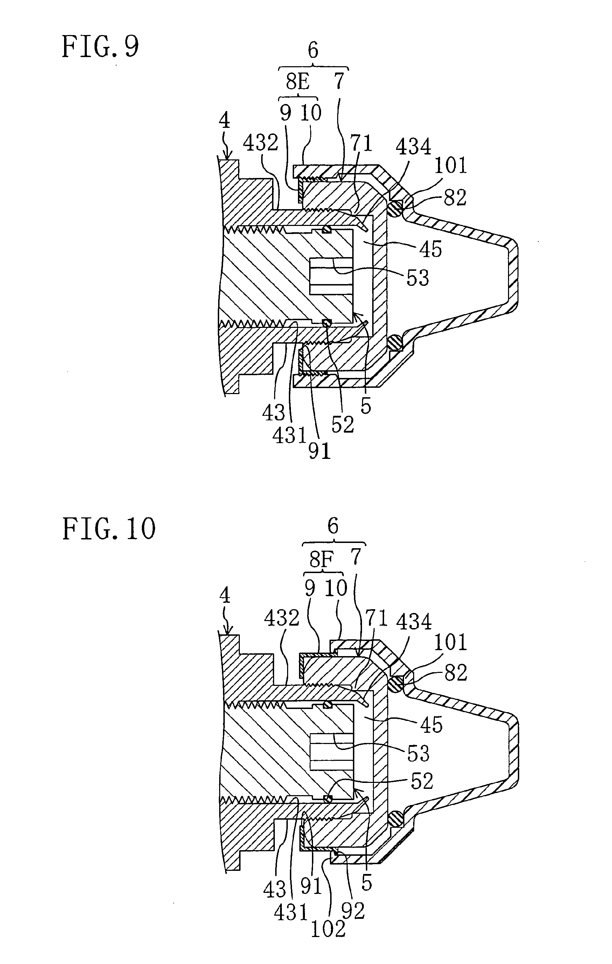

FIG. **9** is a cross-sectional view mainly illustrating a valve cover (**6**) of a closing valve (**3**) according to EMBODIMENT 5. The resin cap (**8E**) of EMBODIMENT 5 has a divided structure, i.e., is divided into a first divided portion (**9**) and a second divided portion (**10**).

Specifically, the resin cap (**8E**) includes: the first divided portion (**9**) covering a cover body (**7**) from the side facing a valve housing (**4**); and the second divided portion (**10**) removably screwed to the first divided portion (**9**) and covering the cover body (**7**) from the side opposite the first divided portion (**9**).

The first divided portion (**9**) is a bottomed-cylindrical member made of resin. An external thread is formed in the outer periphery of the open end of the first divided portion (**9**). The bottom of the first divided portion (**9**) has an opening (**91**) sufficient for insertion of a small-diameter part (**432**) of the valve housing (**4**).

The second divided portion (**10**) is a bottomed-cylindrical member made of resin. An internal thread for engaging the external thread of the first divided portion (**9**) is formed in the inner periphery of the open end of the second divided portion (**10**). An O ring-pressing part (**101**) is formed in the inner periphery of the second divided portion (**10**) around the entire circumference thereof. An O ring (**82**) made of rubber is set at this O ring-pressing part (**101**). That is, the second divided portion (**10**) is in the same shape as the resin cap (**8E**) of EMBODIMENTS 1 through 3.

The first and second divided portions (**9, 10**) thus configured are attached to, and cover, the cover body (**7**) with the cover body (**7**) held between the first divided portion (**9**) and the second divided portion (**10**) by engaging the internal thread of the second divided portion (**10**) and the external thread of the first divided portion (**9**). More specifically, when the first and second divided portions (**9, 10**) are attached to the cover body (**7**), the bottom of the first divided portion (**9**) touches the internal end face of the cover body (**7**) and the O ring (**82**) in the second divided portion (**10**) touches the external end face of the cover body (**7**). At this time, the O ring (**82**) is deformed by compression and forces the first and second divided portions (**9**) and (**10**) in the direction of separating the first and second divided portions (**9**) and (**10**). Consequently, loosening of screwing between the first divided portion (**9**) and the second divided portion (**10**) may be prevented.

### —Effects of EMBODIMENT 5-

In EMBODIMENT 5, the resin cap (**8E**) constituted by the first divided portion (**9**) and the second divided portion (**10**) covers the cover body (**7**) made of brass so that the cover body (**7**) is not visually identified from outside. This configuration conceals the fact that the cover body (**7**) is made of brass. Accordingly, the risk of theft of the valve cover (**6**) may be minimized.

In addition, in EMBODIMENT 5, the resin cap (**8E**) is attached to the cover body (**7**) by engaging the first and second divided portions (**9, 10**) with the cover body (**7**) held between the first divided portion (**9**) and the second divided portion (**10**). Accordingly, the resin cap (**8E**) is allowed to be attached to the cover body (**7**) without additional structures for attaching the resin cap (**8E**) to the cover body (**7**).

Further, since the first divided portion (**9**) and the second divided portion (**10**) are coupled to each other by screwing, the first and second divided portions (**9, 10**) do not need to be deformed in the coupling. The first and second divided portions (**9, 10**) are easily secured to each other only by rotating the first and second divided portions (**9, 10**).

The other effects are the same as those of EMBODIMENT 3.

### -Modified Examples of EMBODIMENT 5-

In EMBODIMENT 5, the external thread is formed in the first divided portion (**9**) whereas the internal thread is formed in the second divided portion (**10**). However, the present invention is not limited to this, and a configuration in which an internal thread is formed in the first divided portion (**9**) and an external thread is formed in the second divided portion (**10**) may be employed.

The O ring (**82**) is held between the second divided portion (**10**) and the external end face of the cover body (**7**). Alternatively, the O ring (**82**) may be held between the first divided portion (**9**) and the internal end face of the cover body (**7**).

### EMBODIMENT 6

Now, EMBODIMENT 6 of the present invention is described.

A valve cover (**6**) according to EMBODIMENT 6 is different from that of EMBODIMENT 5 in an attachment structure of a resin cap (**8F**) to a first divided portion (9) and a second divided portion (**10**). Each component having substantially the same structure in EMBODIMENT 5 is identified by the same reference numeral and description thereof will be omitted.

FIG. **10** is a cross-sectional view of a closing valve (**3**) according to EMBODIMENT 6.

In EMBODIMENT 6, a locking ring (**92**) bending outward is provided at the edge of the open end of the first divided portion (**9**) around the entire circumference thereof.

On the other hand, a plurality of locking hooks (**102, 102**, ...) bending inward are provided at the edge of the open end of the second divided portion (**10**).

The first and second divided portions (**9, 10**) thus configured are attached to, and cover, a cover body (**7**) with the cover body (**7**) held between the first divided portion (**9**) and the second divided portion (**10**) by engaging the locking hooks (**102, 102**, ...) of the second divided portion (**10**) in the locking ring (**92**) of the first divided portion (**9**). More specifically, when the first and second divided portions (**9, 10**) are attached to the cover body (**7**), the bottom of the first divided portion (**9**) touches the internal end face of the cover body (**7**) and an O ring (**82**) in the second divided portion (**10**) touches the external end face of the cover body (**7**). At this time, the O ring (**82**) is deformed by compression and forces the first and second divided portions (**9**) and (**10**) in the direction of separating the first and second divided portions (**9**) and (**10**). Consequently, engaging between the locking ring (**92**) of the first divided portion (**9**) and the locking hooks (**102**, **102**, ...) of the second divided portion (**10**) may be secured.

### -Effects of EMBODIMENT 6-

In EMBODIMENT 6, the resin cap (**8F**) covers the cover body (**7**) made of brass so that the cover body (**7**) is not visually identified from outside. This configuration conceals the fact that the cover body (**7**) is made of brass. Accordingly, the risk of theft of the valve cover (**6**) may be minimized.

In addition, in EMBODIMENT 6, the first divided portion (**9**) and the second divided portion (**10**) are coupled only by engaging the locking ring (**92**) and the locking hooks (**102, 102**, ...) without screwing as in EMBODIMENT 5. Accordingly, the resin cap (**8E**) is attached or detached with ease. This configuration is advantageous especially for a case where the resin cap (**8F**) is made of a relatively soft resin.

The other effects are the same as those of EMBODIMENT 5.

### —Modified Examples of EMBODIMENT 6-

In EMBODIMENT 6, the locking ring (**92**) is provided on the first divided portion (**9**) whereas the locking hooks (**102, 102**, ...) are provided on the second divided portion (**10**). However, the present invention is not limited to this configuration. Alternatively, a configuration in which a plurality of locking hooks bending outward are provided on the first divided portion (**9**) and a locking ring bending inward is provided on the second divided portion (**10**) may be employed.

The second divided portion (**10**) is positioned outside the first divided portion (**9**) in this embodiment. However, the present invention is not limited to this, and the first divided portion (**9**) may be positioned outside the second divided portion (**10**).

Further, the O ring (**82**) is not necessarily held between the second divided portion (**10**) and the external end face of the cover body (**7**), and may be held between the first divided portion (**9**) and the internal end face of the cover body (**7**).

### EMBODIMENT 7

Now, EMBODIMENT 7 of the present invention is described.

A valve cover (**6**) according to EMBODIMENT 7 is not provided with a resin cap and, instead, a cover body (**7G**) is coated with plating. Each component having substantially the same structure in EMBODIMENT 1 is identified by the same reference numeral and description thereof will be omitted.

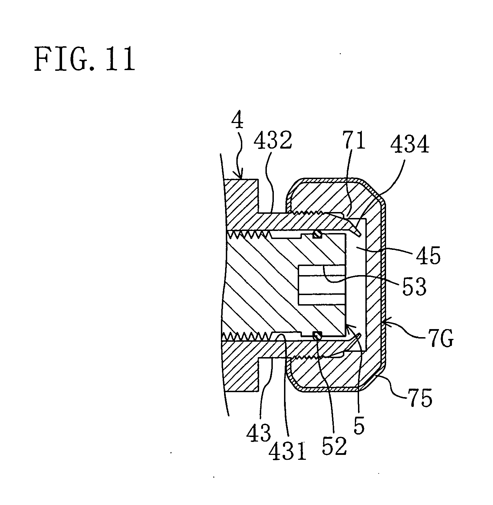

FIG. **11** is a cross-sectional view of a closing valve (**3**) according to EMBODIMENT 7.

The valve cover (**6**) of EMBODIMENT 7 includes the cover body (**7G**) whose surface is coated with plating. More specifically, this cover body (**7G**) is coated with zinc plating and a plating layer (**75**) is formed on the surface of the cover body (**7G**). (In FIG. **11**, the plating layer (**75**) is shown thicker than an actual layer for emphasis.) In this manner, the surface of the cover body (**7G**) is coated with zinc plating, thus making the surface of the cover body (**7G**) black so that the cover body (**7G**) seems to be made of resin.

### -Effects of EMBODIMENT 7-

In EMBODIMENT 7, the cover body (**7G**) is coated with zinc plating so that the cover body (**7G**), which is actually made of brass, seems to be made of resin in appearance. This configuration conceals the fact that the cover body (**7G**) is made of brass. Accordingly, the risk of theft of the valve cover (**6**) may be minimized.

Further, since the fact that the cover body (**7G**) is made of brass is concealed without providing a resin cap, it is unnecessary to attach/detach a cap after/before attaching/detaching the cover body (**7G**). As a result, workability in attaching/detaching the cover body (**7G**) may be enhanced. Moreover, the absence of a resin cap may reduce the cost accordingly.

### —Modified Examples of EMBODIMENT 7-

In EMBODIMENT 7, the cover body (**7G**) is coated with zinc plating. However, the present invention is not limited to this. The plating may be of any type as long as the fact that the cover body (**7G**) is made of brass is concealed. In particular, black chromium plating, black nickel plating, and black rhodium plating, for example, are preferable because the use of such materials makes the cover body (**7G**) seem to be made of resin.

### OTHER EMBODIMENTS

The foregoing embodiments may have the following configurations.

In the foregoing embodiments, the resin cap (**8, 8B** through **8D**) is attached to the valve housing (**4**) or the cover body (**7**) by screwing or engagement. However, the present invention is not limited to these configurations. Alternatively, the resin cap (**8, 8B** through **8D**) may be fitted into the valve housing (**4**) or cover body (**7**).

In attaching the resin cap (**8**, **8B** through **8F**), the O ring (**82**) is held between the resin cap (**8, 8B** through **8F**) and the cover body (**7**). However, the present invention is not limited to these configurations. Alternatively, any elastic member may be used as long as the resin cap (**8, 8B** through **8F**) is forced in the direction opposite to the insertion direction of the cover body (**7**). If no anti-loosening member is necessary for the resin cap (**8**, **8B** through **8F**), the elastic member such as the O ring (**82**) may be omitted.

In the foregoing embodiment, closing valves (**3**) are provided at the upstream and downstream sides of the compressor (**21**). However, the present invention is not limited to this. For example, a closing valve (**3**) may be provided at a connecting portion of a pipe between an outdoor unit and an indoor unit. That is, the location of a closing valve (**3**) is not specifically limited as long as the closing valve (**3**) is used for a refrigeration system.

Further, in the foregoing embodiments, the valve covers (**6**) for the closing valves (**3**) are described. The configurations of the foregoing embodiments are also applicable to a cover member for covering an opening in a branch joint. Specifically, the configurations of the foregoing embodiments can be employed for a cover member for covering an opening in a branch joint such as the service port (**44**) of the closing valve (**3**) provided in a pipe of a refrigeration system.

Furthermore, the configurations of the valve covers (**6**) of the foregoing embodiments are applicable to a cover member (**441**) provided in a service port (**44**) of a closing valve (**3**).

The embodiments described above are preferred examples in nature, and not intended to limit the invention, application, and the range of the use thereof.

### INDUSTRIAL APPLICABILITY

As described above, the present invention is useful for a cover member for covering an operation part of a closing valve or an opening in a branch joint in a refrigeration system.

## Claims

1. A cover member for covering either an operation part (**45**) of a closing valve (**3**) or an opening in a branch joint provided in a refrigeration system (**1**), the cover member comprising:
a cover body (**7**) screwed to either the closing valve (**3**) or the branch joint to cover the operation part (**45**) or the opening; and
a resin cap (**8**) for covering the cover body (**7**).

2. The cover member of claim 1, wherein the resin cap (**8**) is removably secured to the cover body (**7**) with the cover body (**7**) inserted into the resin cap (**8**).

3. The cover member of claim 1, wherein the resin cap (**8**) is removably secured to the closing valve (**3**) or the branch joint with the cover body (**7**) inserted into the resin cap (**8**).

4. The cover member of claim 2, wherein the resin cap (**8**) is removably screwed to the cover body (**7**).

5. The cover member of claim 4, further comprising an elastic member (**82**) that is held between the resin cap (**8**) and the cover body (**7**) and forces the resin cap (**8**) in a direction opposite to a direction in which the cover body (**7**) is inserted.

6. The cover member of claim 1, wherein
the resin cap (**8**) includes:
a first divided portion (**9**) covering the cover body (**7**) from the side thereof facing either the closing valve (**3**) or the branch joint; and
a second divided portion (**10**) removably secured to the first divided portion (**9**) and covering the cover body (**7**) from the side thereof opposite to the first divided portion (**9**).

7. The cover member of claim 6, wherein the first and second divided portions (**9**, **10**) are removably screwed to each other.

8. The cover member of claim 7, further comprising an elastic member (**82**) that is held between the cover body (**7**) and either the first or second divided portion (**9, 10**) and forces the first or second divided portion (**9, 10**) in a direction of separating the first and second divided portions (**9, 10**).

9. A cover member that is a brass-made cover member (**6**) for covering either an operation part (**45**) of a closing valve (**3**) or an opening in a branch joint provided in a refrigeration system (**1**), wherein the cover member has a surface coated with plating.

10. The cover member of claim 9, wherein the plating is a material selected from the group consisting of black chromium plating, zinc plating, black nickel plating, and black rhodium plating.
